# EUROPEAN PATENT APPLICATION

(11) **EP 4 047 558 A1**
(43) Date of publication of application: **24.08.2022**
(21) Application number: 21179457.3
(22) Date of filing: 15.06.2021
(51) Int. Cl.: G06T 19/00, G06T 7/73

(54) **SYSTEM FOR GENERATING 3D MOBILE AUGMENTED REALITY**

(30) Priority: 17.02.2021 KR 20210021241
(71) Applicant: Kim, Miehee Ju, Daejeon 34145 (KR); Kim, Jean, Daejeon 34145 (KR)
(72) Inventor: Kim, Miehee Ju, Daejeon 34145 (KR); Kim, Jean, Daejeon 34145 (KR)
(74) Representative: Wunderlich & Heim Patentanwälte Partnerschaftsgesellschaft mbB

(57) **Abstract**

A system for generating three-dimensional (3D) mobile augmented reality (AR) includes a cloud server configured to compare and match visual features of a scene of the interior of a house obtained by capturing the interior of the house with features of a physical space included in a stored 3D feature map of an interior environment of the house, and when the matching is successful, to transmit AR content including the pose and 6 degrees of freedom (6 DOF) pose of a mobile device and virtually arranged models attached to an anchor in the scene of the interior of the house, and the mobile device configured to generate and output 6 DOF AR by rendering the AR content to an image of the captured scene of the interior of the house based on the pose and 6 DOF pose of the mobile device from the cloud server.

## Description

### BACKGROUND OF THE INVENTION

### Field of the Invention

The present invention relates to augmented reality (AR), and more particularly, to a system for generating three-dimensional (3D) mobile AR.

### Description of the Related Art

It is expected that mixed reality (MR) will be an essential technology in the network society and strongly shake the consumer electronics market. MR includes augmented reality (AR) and augmented virtuality (AV).

AR is used to represent the concept of providing users with a combination of real-world objects and computer-rendered content. Specifically, one AR representation means layering one or more virtual objects in front of reality for the world from a user's point of view through a see-through head-mounted display (HMD). One application of AR is to allow users to view and interact remotely in three dimensions (3D), as if each participant shared the same physical space. Therefore, remote communication and interaction may be as natural as face-to-face communication. In AV, a user sees a real-world object captured by an HMD camera, and the captured object is then displayed on a display along with computer-rendered content. Therefore, in AV, the display is not a see-through one.

In 2016, Microsoft launched a mobile AR HMD, Hololens. Several other HMDs have been launched from other companies including Meta and Magic Leap, to further improve the AR technology.

In virtual reality (VR), a user is immersed in a virtual environment in which all content is virtual. Some VR applications specifically aim at 360-degree live video consumption, education, and training, such as games, concerts, or sports. VR content is displayed through a non-see-through HMD such as Oculus Rift, HTC Vive, Google Daydream, or Samsung GearVR.

When one piece of virtual content for MR or VR is placed at the user's viewpoint, this virtual content is placed at a content pose. A pose defines both a (3D) position and a (3D) direction.

In an existing device such as Microsoft HoloLens or Google Tango, virtual content is stored and attached to specific visual features (spatial anchors) that the device may detect by a camera of the device. When the user returns to the same position, visual search and matching are performed to associate previously stored visual features with current visual features observed through the camera of the device. A shortcoming with this method lies in that the method is very computationally intensive because the device should examine an environment (using multiple cameras, as is the case with HoloLens), perform fine image analysis to infer specific visual features, and perform matching for content including the content of all previously visited locations. The resulting requirement of a significant amount of processing power increases battery consumption.

Technologies have advanced to a level at which extreme realism may be achieved in VR. VR is an artificial environment created through a combination of the real world and computer-generated data. AR is a type of VR aiming to replicate an artificial environment in a computer by reinforcing virtual objects in addition to real objects.

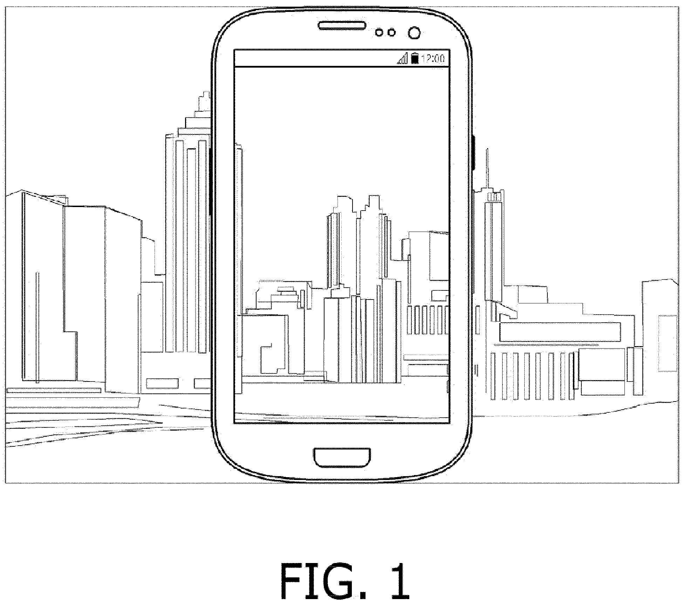

FIG. 1 illustrates an example of AR. A special device or camera is required to combine a virtual object with a real object. Referring to FIG. 1, when a user captures an image of a building or sculpture on a street, for example, by a smartphone, information about the building or the sculpture is displayed along with the image of the building or the sculpture on the screen of the smartphone. AR and VR are also increasingly being used in manufacturing processes. A simulated environment may be created with real objects (physical objects) and simulated objects (virtual objects) and used to improve design and manufacturing processes.

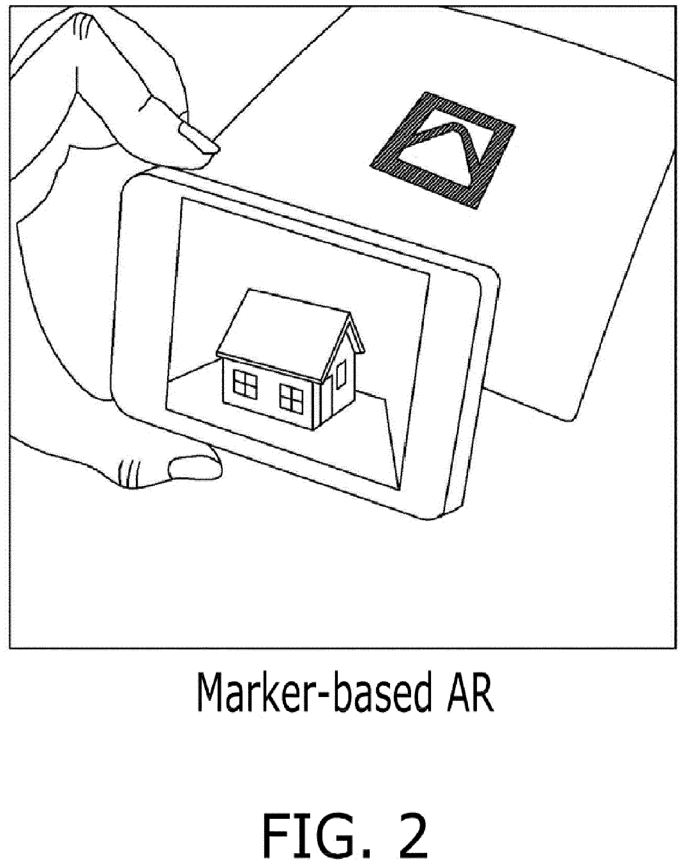

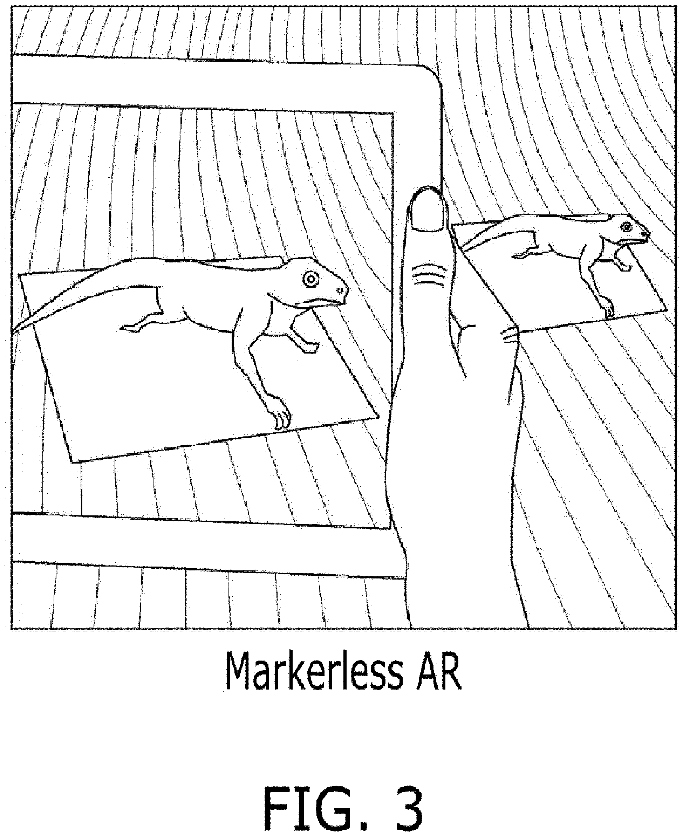

Two models are available for AR: marker-based AR and markerless AR. FIG. 2 illustrates an exemplary marker-based AR model, and FIG. 3 illustrates an exemplary markerless AR model. Referring to FIG. 2, a specific area for rendering a computer-generated image (augmented image) may be rendered using a marker in the marker-based AR. The marker is a symbol used to arrange a virtual object and may take the form of a quick response (QR) code or any black and white square pattern. Referring to FIG. 3, the markerless AR (also called location-based AR) removes markers and identifies the boundaries of a specific area that a camera captures. In the markerless AR, a real environment is used only as a rendering area in which a computer-generated image is rendered over the environment. The markerless AR advantageously offers the possibility of extracting features and information used later from the environment.

Typically, both the AR models are involved in rendering a virtual object on top of the real environment for a user. As the technology grows in the embedded field, an innovative technology required in an AR framework is involved in interaction between virtual objects. However, interactions are usually limited to passive viewing.

In this context, there is a need for an efficient method and system for enabling rendered virtual objects to communicate with each other by using a markerless AR framework.

### SUMMARY OF THE INVENTION

Therefore, the present invention has been made in view of the above problems, and it is an object of the present invention to provide a system for generating three-dimensional (3D) mobile augmented reality (AR), in which 6 degrees of freedom (DOF) AR is generated and output by rendering AR content in a scene of a user-intended real environment obtained by capturing the real environment, based on the pose and 6 DOF pose of a mobile device.

In accordance with the present invention, the above and other objects can be accomplished by the provision of a system for generating three-dimensional (3D) mobile augmented reality (AR). The system includes a cloud server configured to compare and match visual features of a scene of the interior of a house obtained by capturing the interior of the house with features of a physical space included in a stored 3D feature map of an interior environment of the house, and when the matching is successful, to transmit AR content including the pose and 6 degrees of freedom (6 DOF) pose of a mobile device and virtually arranged models attached to an anchor in the scene of the interior of the house, and the mobile device configured to generate and output 6 DOF AR by rendering the AR content to an image of the captured scene of the interior of the house based on the pose and 6 DOF pose of the mobile device from the cloud server. The system for generating 3D mobile AR is implemented by an AR software development kit (SDK).

The interior of the house may include the interior of a house to be rented or a house for sale, and the virtually arranged models may include an interior accessory, furniture, and a household appliance to be placed inside the house.

The cloud server may include a cloud anchor configured to, when the mobile device communicates with the cloud server, determine the location of the mobile device, search for a virtually arranged model attached to an anchor applied by a home staging tool, and determine the pose of the mobile device in the scene based on a stored pose of the cloud anchor. The 3D feature map of the interior environment of the house, the pose of the anchor, virtual models, and the AR content may be stored in a pre-built cloud anchor database (DB) by an application programming interface (API) provided by the cloud anchor and retrieved to determine the location of the mobile device by the cloud anchor. The mobile device may include a display having a 6 DOF with three position vectors (x, y, z) and three direction vectors (x, y, z) based on 6-axis sensors and outputting the 6 DOF AR, and a camera configured to capture an image of the interior of the house. The AR SDK may include ARKit or ARCore.

In accordance with another aspect of the present invention, there is provided a system for generating 3D mobile AR. The system includes a mobile device configured to capture a real space and convert a 3D image of the captured real space into a virtual space, and a cloud server configured to receive and store information about the virtual space from the mobile device, transmit the stored information about the virtual space, when the mobile device invokes the information about the virtual space while providing visual features of the real space, and generate and output 6 DOF AR by rendering AR content including virtually arranged models stored at an intended position of the virtual space, displayed based on a 6 DOF pose by the mobile device.

The real space may include the interior of a house, the information about the virtual space may include a 3D feature map of an environment including the 6 DOF pose of the mobile device, and the virtually arranged models include an interior accessory, furniture, and a household appliance to be placed inside the house.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a diagram illustrating augmented reality (AR) ;
FIGS. 2 and 3 are diagrams illustrating a marker-based AR model and a markerless AR model, respectively; and
FIG. 4 is a block diagram illustrating the configuration of a three-dimensional (3D) mobile AR generation system according to the present invention.

### DETAILED DESCRIPTION OF THE INVENTION

A three-dimensional (3D) mobile augmented reality (AR) generation system according to an embodiment of the present invention will be described below in detail.

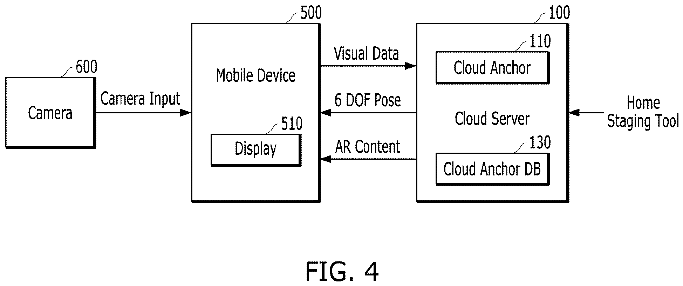

FIG. 4 is a block diagram illustrating the configuration of a 3D mobile AR generation system according to the present invention.

The 3D mobile AR generation system according to the present invention is implemented by a software development kit (SDK) and includes a cloud server 100 and a mobile device 500. The AR SDK includes ARKit or ARCore. An SDK is a development tool provided to a programmer to facilitate development of an application program. In the present invention, an SDK refers to a dedicated software development kit for exchanging information related to a user of the mobile device 500 according to an embodiment of the present invention, communicating with the cloud server 100, providing a content service, and so on. A company operating a block chain-based personalized health care compensation service platform according to the present invention provides the dedicated software development kit to a software development company, for implementation. ARCore SDK is an AR SDK developed by Google, which provides the functions of motion tracking, environmental understanding, and lighting estimation. ARCore is an SDK developed by Google, for use in building AR applications. Another kit for implementing AR is ARKit. ARKit supports devices running on iOS 11, whereas ARCore supports devices running on Android Nougat (7.0) or higher. Because the goal is to create an Android app with AR technology, ARCore is used. Although the Android app was to be developed in Android Studio, Android Studio did not perform well on a laptop for some reason. Therefore, the Android app has been developed using ARCore in a unity. How to use ARCore in the unity, particularly a process of developing an AR Ruler (Virtual Ruler) will be described. As the title suggests, a process of starting ARCore in the unity will be described herein.

The cloud server 100 compares and matches a user-desired real environment, for example, visual features of a scene of the interior of a house obtained by capturing the interior of the house, with features of a physical space included in a stored three-dimensional (3D) feature map of an interior environment of the house. When the matching is successful, the cloud server 100 transmits AR content including 6 degrees of freedom (6 DOF) pose of the mobile device 500 and virtually arranged models attached to an anchor to the mobile device 500. The interior of the house may include the interior of a house to be rented or a house for sale, and the virtually arranged models may include interior accessories, furniture, and household appliances to be placed inside the house.

The cloud server 500 includes a cloud anchor 110 configured to, when the mobile device 500 communicates with the cloud server 100, determine the location of the mobile device 500, search for a virtually arranged model attached to the anchor applied by a home staging tool, and determine the pose of the mobile device 500 in the scene of the interior of the house based on a stored pose of the cloud anchor 110.

The 3D feature map of the environment, the pose of the anchor, virtual furniture models, and the AR content are stored in a pre-built cloud anchor database (DB) 130 by an application programming interface (API) provided by the cloud anchor 110 and retrieved to determine the location of the mobile device 100 by the cloud anchor 110.

The mobile device 500 generates and outputs 6 DOF AR by rendering the AR content in the captured image of the interior of the house based on the pose and 6 DOF pose of the mobile device from the cloud server 100.

The mobile device 500 may include a camera 600 that captures an image of an environment around the user and a display 510 that has 6 DOF with three position vectors (x, y, z) and three direction vectors (x, y, z) based on 6-axis sensors and outputs the 6 DOF AR.

The camera 600 is typically embedded in the mobile device 500 and captures a real scene (environment) including multiple moving objects (hereinafter, referred to as physical objects). In some implementation, the camera 600 may be an external device to the mobile device 500. In this case, the camera 600 captures a real scene and provides the captured real scene as an input to the mobile device 500. In some implementation, the user focuses on a particular area (e.g., a chess board) with the camera 600. In this case, only the specific area is regarded as a real scene.

According to another embodiment of the present invention, the 3D mobile AR generation system includes the mobile device 500 configured to capture a real space, apply 3D coordinates to a 3D image of the captured real space, and convert the 3D image into a virtual space, and the cloud server 100 configured to receive and store information about the virtual space from the mobile device 500, transmit the stored information about the virtual space, when the mobile device 500 invokes the information about the virtual space while providing visual features of the real space, and generate and output 6 DOF AR by rendering AR content including a virtually arranged model stored at an intended position of the virtual space, which the mobile device 500 displays based on a 6 DOF pose. The information about the virtual space may include a 3D feature map of the environment including the 6 DOF pose of the mobile device 500. The real space may include the interior of the house, and the information about the virtual space may include the 3D feature map of the environment including the 6 DOF pose of the mobile device.

Now, a description will be given of an operation of the 3D mobile AR generation system according to an embodiment of the present invention.

The 3D mobile AR generation system according to an embodiment of the present invention is implemented by an SDK such as ARCore or ARKit. The 3D feature map of the interior environment of the house may be stored in the cloud anchor DB 130 of the cloud server 100 and retrieved to determine the location of the mobile device 500 by an API provided by this platform (e.g., an ARCore cloud anchor or an Azure spatial anchor).

Conventionally, two types of interfaces are available to implement cloud computing: an interface related to computing resources related to a server, which is a virtual machine, and an interface related to storage resources related to data storage and a file structure. APIs for the interface related to computing resources include ListServer, CreateServer, StartServer, StopServer, RestartServer, ModifyServer, RebootServer, and DestroyServer. In addition, APIs for the interface related to storage resources related to data storage and a file structure include CreatVolume, DeleteVolume, GetVolume, PutBucket, DeleteBucket, GetBucket, PutObject, DeleteObject, and GetObject.

The mobile device 500 includes one or more cameras 600 for capturing images of the environment around the user (not shown), that is, images of the interior of the house. Each camera 600 may be in the visible light range (also known as red, green, blue (RGB)) and/or the infrared range, and may be a thermal camera. The mobile device 500 may be a smart phone such as a Google Tango phone (Lenovo and Asus), an iPhone, or an Android phone, which has ARKit (Apple) or ARCore (Google). The mobile device 500 may be implemented using, for example, an HMD such as Microsoft's HoloLens or ODG R7/R8/R9. The HMD may be Oculus Rift or HTC Vive for VR applications. Optionally, the mobile device 500 may be implemented using any other type of wearable device, smart phone, and/or tablet computer with optical enhancement such as a Google cardboard or Mira Prism.

The mobile device 500 communicates with the cloud server 100 to determine the location of the mobile device 500 and retrieve an authenticated virtual furniture model through the home staging tool, upon execution by the user.

The user focuses on a specific desired area with the camera 600 of the mobile device 500, captures a real environment around the user, that is, the interior of the house, and uploads visual data (features) of the scene of the interior of the house to the cloud server 100. The visual features vary according to the locations of the user (the mobile device). That is, as the virtual furniture model is mapped to absolute coordinates in the real space, the mobile device 500 may display the virtual furniture model by changing its pose in correspondence with a changed location, as if the virtual furniture model were placed in the real space.

The cloud anchor 110 compares and matches the visual features of the scene of the interior of the house uploaded to the cloud server 100 with the features of the physical space stored in the pre-built cloud anchor DB 130.

When the matching is successful, the pose of the mobile device 500 relative to the anchor may be obtained.

Upon successful matching, the cloud anchor 110 determines the pose of the mobile device 500 in the scene of the interior of the house based on the pose of the cloud anchor stored in the cloud anchor DB 130, and transmit AR content including 6 DOF pose of the mobile device and virtual furniture models attached to the anchor to the mobile device 500.

Once information about the pose of the mobile device with respect to the anchor is retrieved from the cloud anchor DB 130, the pose information is used to render the virtual furniture models attached to the given cloud anchor, so that the virtual models are arranged in the physical space. Accordingly, the user may view the virtually arranged models on the display 510 of the mobile device 500 with the naked eyes. That is, the mobile device 500 generate 6 DOF AR by rendering the AR content to the captured scene image based on the pose and 6-DOF pose of the mobile device 500 from the cloud server 100, and output the 6 DOF AR on the screen of the display 510 so that the user may view the 6 DOF AR with the naked eyes.

Rendering or image synthesis refers to a process of creating an image from a model or a scene file being a collection of models by a computer program. One scene file contains objects of a precisely defined language or data structure, which may include information about an arrangement of figures representing a virtual scene, viewpoints, texture mapping, lighting, and shading. The data included in the scene file is processed by a rendering program to produce a digital image or a raster graphics image file as a result. Although technically very diverse, rendering techniques commonly create a two-dimensional (2D) picture from 3D rendering stored in the scene file along a graphics pipeline through a rendering device such as a graphics processing unit (GPU). A GPU is a device designed to help a central processing unit (CPU) to perform complex rendering calculations. If a scene looks relatively realistic and predictable under virtual lighting, then the rendering software should perform rendering calculations. In the rendering calculations, computer-generated 'figurative lighting' is calculated, rather than all lighting effects are calculated. Further, "rendering" refers to a process of calculating the effect of a video editing file to produce a final video output.

Rendering is one of the main sub-themes of 3D computer graphics and connected to other topics. Rendering is the final step for giving a model and an animation a final look in the graphics pipeline. As computer graphics has become increasingly complex since the 1970s, rendering becomes diverse. Rendering is used in architecture, video games, simulators, film, television special effects, and design visualization through different capabilities and techniques in each field. In addition, various rendering programs are available for rendering. Some programs are integrated to create large models and animation packages, some are standalone products, and some are a part of a free source project. A rendering program is also an engineering program based on a selective combination of optics, visual systems, mathematics, and software development. In the case of 3D graphics, rendering may take much time because it is "pre-rendering" or real-time processing. Pre-rendering is a computationally heavy process requiring a large volume of computation and is generally used in filmmaking. On the other hand, real-time rendering relies on a graphics card equipped with a 3D hardware accelerator, for use in 3D video games.

As is apparent from the above description, the present invention is implemented by an AR SDK. In the present invention, visual features of a scene of the interior of a house obtained by capturing the interior of the house as a user-desired real environment are compared and matched with features of a physical space included in a 3D feature map of a stored interior environment of the house. When the matching is successful, AR content including 6 DOF pose of a mobile device and virtually arranged models attached to an anchor is transmitted. 6 DOF AR may be generated and output by rendering the AR content to the captured scene image based on the pose and 6 DOF pose of the mobile device. Further, as the virtually arranged models are mapped to absolute coordinates in a real space, the mobile device may display the virtually arranged models by changing its pose in correspondence with a changed location, as if the virtually arranged models were placed in the real space.

The above virtually arranged models may be mainly furniture such as a children's doll house. However, any products for sale to be placed in a basic house to be sold or rented may be virtually arranged and traded, such as a washbasin, tiles, a bathtub, a shower, a toilet, a kitchen induction, a kitchen dishwasher, wallpaper, and interior accessories like doorknobs. Particularly, considering that American houses are often painted inside, not only wallpaper companies but also paint companies may be involved. Further, lighting companies, companies of curtains and vertical blinds, and window companies like Eagon in Korea may be involved. Although furniture is mainly virtually arranged and sold, everything related to house interiors may be dealt with, such as various wall-mounted interior accessories, paintings, plant pots, and flowers. How to operate this system is important, and other companies as well as furniture companies may be involved.

Although specific embodiments of the present invention have been described for illustrative purposes, those skilled in the art will appreciate that various modifications, additions, and substitutions are possible, without departing from the scope and spirit of the invention. Therefore, the scope of the present invention should not be limited to the described embodiments, but should be defined not only by the scope of the following claims, but also by the equivalents of the claims.

## Claims

1. A system for generating three-dimensional (3D) mobile augmented reality (AR), the system comprising:
a cloud server configured to compare and match visual features of a scene of the interior of a house obtained by capturing the interior of the house with features of a physical space included in a stored 3D feature map of an interior environment of the house, and when the matching is successful, to transmit AR content including the pose and 6 degrees of freedom (6 DOF) pose of a mobile device and virtually arranged models attached to an anchor in the scene of the interior of the house; and
the mobile device configured to generate and output 6 DOF AR by rendering the AR content to an image of the captured scene of the interior of the house based on the pose and 6 DOF pose of the mobile device from the cloud server,
wherein the system for generating 3D mobile AR is implemented by an AR software development kit (SDK).

2. The system according to claim 1, wherein the interior of the house includes the interior of a house to be rented or a house for sale, and the virtually arranged models include an interior accessory, furniture, and a household appliance to be placed inside the house.

3. The system according to claim 1, wherein the cloud server comprises a cloud anchor configured to, when the mobile device communicates with the cloud server, determine the location of the mobile device, search for a virtually arranged model attached to an anchor applied by a home staging tool, and determine the pose of the mobile device in the scene based on a stored pose of the cloud anchor,
wherein the 3D feature map of the interior environment of the house, the pose of the anchor, virtual models, and the AR content are stored in a pre-built cloud anchor database (DB) by an application programming interface (API) provided by the cloud anchor and retrieved to determine the location of the mobile device by the cloud anchor,
wherein the mobile device comprises a display having a 6 DOF with three position vectors (x, y, z) and three direction vectors (x, y, z) based on 6-axis sensors and outputting the 6 DOF AR, and a camera configured to capture an image of the interior of the house, and
wherein the AR SDK includes ARKit or ARCore.

4. A system for generating three-dimensional (3D) mobile augmented reality (AR), the system comprising:
a mobile device configured to capture a real space and convert a 3D image of the captured real space into a virtual space; and
a cloud server configured to receive and store information about the virtual space from the mobile device, transmit the stored information about the virtual space, when the mobile device invokes the information about the virtual space while providing visual features of the real space, and generate and output 6 degrees of freedom (DOF) AR by rendering AR content including virtually arranged models stored at an intended position of the virtual space, displayed based on a 6 DOF pose by the mobile device.

5. The system according to claim 4, wherein the real space includes the interior of a house, the information about the virtual space includes a 3D feature map of an environment including the 6 DOF pose of the mobile device, and the virtually arranged models include an interior accessory, furniture, and a household appliance to be placed inside the house.
